# EUROPÄISCHE PATENTSCHRIFT

(11) **EP 1 272 785 B1**
(45) Veröffentlichungstag und Bekanntmachung des Hinweises auf die Patenterteilung: **01.12.2004**
(21) Anmeldenummer: 00951424.1
(22) Anmeldetag: 21.07.2000
(51) Int. Cl.: F16L 1/00

(54) **VERFAHREN UND VORRICHTUNG ZUR DICHTEN BEFESTIGUNG EINES SCHLAUCHSTÜCKES AUS ELASTOMEREM WERKSTOFF AN EINEM ANSCHLUSSTEIL**
METHOD AND DEVICE FOR TIGHTLY FIXING A PIECE OF FLEXIBLE TUBING CONSISTING OF AN ELASTOMER MATERIAL TO A CONNECTING PART
PROCEDE ET DISPOSITIF POUR FIXER DE MANIERE ETANCHE UNE PIECE TUBULAIRE EN MATERIAU ELASTOMERE SUR UNE PARTIE DE RACCORDEMENT

(30) Priorität: 30.07.1999 DE 19935402
(43) Veröffentlichungstag der Anmeldung: 08.01.2003
(73) Patentinhaber: ContiTech Luftfedersysteme GmbH, 30165 Hannover (DE)
(72) Erfinder: HASSELBRING, Bernd, D-29690 Lindwedel (DE)
(74) Vertreter: Schneider, Egon
(86) Internationale Anmeldenummer: PCT/EP2000/007005
(87) Internationale Veröffentlichungsnummer: WO 2001/009541

(56) Entgegenhaltungen:
- EP-A- 0 319 448
- EP-A- 0 460 441
- EP-A- 0 548 627
- DE-A- 4 038 653
- DE-A- 4 211 135
- US-A- 4 280 380
- US-A- 4 471 520
- PATENT ABSTRACTS OF JAPAN vol. 014, no. 305 (M-0992), 29. Juni 1990 (1990-06-29) -& JP 02 099233 A (SANYO MACH WORKS LTD), 11. April 1990 (1990-04-11)

## Beschreibung

Die Erfindung betrifft ein Verfahren zur dichten Befestigung eines Schiauchstückes aus elastomerem Werkstoff, insbesondere von Schlauchrollbäigen für Luftfedern, an einem Anschlussteil mittels eines Spannringes, der durch ein Presswerkzeug radial verpreßt wird. Die Erfindung betrifft ferner ein Presswerkzeug zur Durchführung des Verfahrens.

Es ist bekannt, zum Verpressen des Balgendes eines Schlauchrollbalges an dem Abrollkolben bzw. dem Deckel einer Luftfeder einen radial zusammengepreßten metallischen Spannring zu verwenden. Die radiale Verpressung des Spannringes erfolgt durch ein Presswerkzeug, das aus einzelnen kreisförmig angeordneten Pressbacken besteht. Die einzelnen Pressbacken werden bei der Verpressung des Spannringes soweit zusammengefahren, bis die erforderliche Pressung zwischen Balgwand und Anschlussteil (Abrollkolben bzw. Deckel der Luftfeder) erreicht ist.

Entscheidend für die Güte der Balgbefestigung ist das präzise Erreichen der notwendigen Pressung zwischen Balgwand und Spannbereich. Die Pressung darf nicht zu gering sein. da sich in diesem Fall die aus der Pressung resultierende Reibkraft zwischen Balgwand und Anschlussteil und somit die erforderliche Haltekraft der Balgwand am Anschlussteil verringert. Ebenso wenig darf die Pressung zu groß sein, da dann sowohl die Balgwand als auch das Anschlussteil beschädigt werden könnten. Darüber hinaus kann eine zu hohe Pressung und eine daraus resultierende Deformation des Anschlussteils ebenfalls zu einem Abfall der Haltekraft führen.

Zur Befestigung eines Schlauchrollbalges an ein Anschlussteil einer Luftfeder sind grundsätzlich zwei Verfahren bekannt. Bei dem einen Verfahren werden die Pressbacken des Presswerkzeuges kraftgesteuert zusammengefahren, d. h., der Pressvorgang wird gestoppt, wenn die von dem Presswerkzeug erzeugte Kraft einer vorgegebenen Kraft entspricht. Der Nachteil dieses Verfahrens ist darin zu sehen, dass es in dem gesamten System zu Krafttoleranzen kommen kann und die von dem Presswerkzeug erzeugte Kraft deshalb nicht in einem eindeutigen Zusammenhang zu der Kraft steht, die zwischen dem Schlauchrollbalg und dem Anschlussteil entsteht.

So ist es beispielsweise möglich, dass es aufgrund der Alterung des Presswerkzeuges innerhalb dieses zu einer erhöhten Reibung kommt. In diesem Fall muss ein erhöhter Teil der von dem Presswerkzeug aufgewandten Kraft zur Überwindung dieser Reibung verwendet werden. Somit vermindert sich bei gleicher vorgegebener Gesamtkraft, die das Presswerkzeug erzeugt, die Kraft, die sich zwischen dem Schlauchrollbalg und den Anschlussteil infolge des Verpressens des Spannringes einstellt.

Es ist ebenfalls möglich, dass bei der Durchführung des Verfahrens Spannringe unterschiedlicher Härte verwendet werden. Zur Verformung eines weichen Spannringes ist nur eine geringe Kraft erforderlich, wohingegen zur Verformung eines harten Spannringes eine große Kraft erforderlich ist. Wird in beiden Fällen von dem Presswerkzeug eine vorgegebene Gesamtkraft erzeugt, so führt dies im ersten Fall dazu, dass sich die Kraft zwischen dem Schlauchrollbalg und dem Anschlussteil erhöht, wohingegen sie sich in dem zweiten Fall erniedrigt. Schließlich kann auch das Anschlussteil selbst unterschiedliche Steifigkeiten aufweisen, was bei einer vorgegebenen Gesamtkraft des Presswerkzeuges ebenfalls dazu führt, dass sich unterschiedliche Kräfte zwischen dem Schlauchrollbalg und dem Anschlussteil einstellen.

Bei dem anderen bekannten Verfahren werden die Pressbacken des Presswerkzeuges weggesteuert zusammengefahren, d. h. ein Pressvorgang wird beendet, sobald die Pressbacken einen vorgegebenen Weg durchlaufen haben. Dieses Verfahren weist den Nachteil auf, dass Maßtoleranzen in den Bauteilen zu unterschiedlichen Kräften zwischen dem Schlauchrollbalg und dem Anschlussteil führen. Wird beispielsweise ein Spannring benutzt, dessen Querschnitt aufgrund von Fertigungstoleranzen unterhalb des vorgegebenen Querschnittes liegt, so führt dies zu einer Reduzierung der Kraft zwischen dem Schlauchrollbalg und dem Anschlussteil. Umgekehrt führt die Verwendung eines Spannringes, dessen Querschnitt oberhalb des vorgegebenen Querschnittes liegt, zu einer erhöhten Kraft zwischen dem Schlauchrollbalg und dem Anschlussteil.

Zusammenfassend ist festzustellen, dass mit keinem der beiden genannten Verfahren Schlauchrollbälge an die Anschlussteile von Luftfedern derart befestigt werden können, dass sich eine vorgegebene definierte Kraft zwischen den Schlauchrollbälgen und den Anschlussteilen der Luftfeder einstellt. die für alle gefertigten Luftfedern übereinstimmt.

EP 0 548 627 A1 offenbart ein Verfahren zur dichten Befestigung eines Schlauchstückes aus elastomerem Werkstück an einem Anschlussteil, bei dem beim Anpressen des Schlauchstückes an das Anschlussteil mittels der Pressbacken eine Axialkraft an dem Anschlussteil gemessen wird. Dieses Verfahren beruht somit darauf, dass beim radialen Andrücken des Schlauchstückes und der damit verbundenen Verformung des Anschlussteils eine Axialkraft auftritt, die vom radialen Anpressdruck abhängig ist. Da die auftretenden Axialkräfte von dem Material und der Ausbildung des Anschlussteils abhängig ist, entstehen für innerhalb von Fertigungstoleranzen unterschiedliche Anschlussteile unterschiedliche Messungen der Axialkraft.

JP-A-02099233 offenbart eine Pressvorrichtung zum Einbringen einer Kerbe in einen dünnwandigen Einsatz einer Schlossmutter und Eindrücken der Kerbe in eine zugehörige Längsnut einer Antriebsachse, auf die die Schlossmutter aufgeschraubt ist. Zum Einbringen der Nut wird der Hub und der Anpressdruck des Presswerkzeuges gemessen und mit vorgegebenen Werten verglichen.

Der Erfindung liegt die Aufgabe zugrunde, ein Verfahren zu schaffen, mit dem der zur Befestigung eines Schlauchstückes an einem Anschlussteil verwendete Spannring derart radial verpreßt werden kann, daß sich eine definierte vorgegebene Kraft zwischen dem Schlauchstück und dem Anschlussteil einstellt. Der Erfindung liegt ebenfalls die Aufgabe zugrunde, ein Presswerkzeug zur Durchführung des Verfahrens zu schaffen.

Gemäß den kennzeichnenden Merkmalen des Anspruchs 1 wird die Aufgabe ausgehend von einem Verfahren der eingangs erläuterten Art durch folgende Verfahrensschritte gelöst:
- es wird eine Kraft-Weg-Kennlinie des Presswerkzeuges zugrunde gelegt, die während des radialen Verpressens eines Spannringes aufgenommen wird, wobei mit der Aufnahme begonnen wird, bevor das Anschlussteil. das Schlauchstück und der Spannring kraft- und spielfrei aufeinander liegen
- aus der Kraft-Weg-Kennlinie wird die Verlustkraft bestimmt, die zur Verformung des Spannringes und zur Überwindung der Reibung im Presswerkzeug notwendig ist
- die über die Verlustkraft hinausgehende Kraft wird so eingestellt, daß sie einer vorgegebenen Kraft zwischen dem Schlauchstück und dem Anschlussteil entspricht.

Die Aufgabe wird ebenfalls durch ein Presswerkzeug gemäss Anspruch 8 gelöst.

Die mit der Erfindung erzielten Vorteile sind insbesondere darin zu sehen, dass unabhängig von "Krafttoleranzen" in dem System (z. B. unterschiedliche Reibung innerhalb des Presswerkzeuges bzw. unterschiedliche Härte der einzelnen verwendeten Spannringe) und Maßtoleranzen der einzelnen verwendeten Bauteile (d. h. des Schlauchstückes, des Anschlussteiles und des Spannringes) eine definierte vorgegebene Kraft zwischen dem Schlauchstück und dem Anschlussteil eingestellt werden kann. Es kann daher weder zu einer zu niedrigen noch zu einer zu hohen Kraft zwischen dem Schlauchstück und dem Anschlussteil kommen, so dass sich die eingangs erläuterten damit verbundenen Nachteile nicht einstellen. Ein weiterer Vorteil des Verfahrens ist darin zu sehen, dass es einfach durchführbar ist und somit die Kosten eines nach dem Verfahren gefertigten Bauteils nicht erhöht.

Gemäß einem ersten Ausführungsbeispiel der Erfindung nach Anspruch 2 wird die Verlustkraft in dem Bereich der Kraft-Weg-Kennlinie bestimmt, in dem das Presswerkzeug soweit zusammengefahren ist, dass das Anschlußteil, das Schlauchstück und der Spannring kraft- und spielfrei aufeinander liegen.

Es hat sich gezeigt, dass die Kraft-Weg-Kennlinie, die während des Zusammenpressens des Presswerkzeuges entsteht, vor und hinter dem Bereich, in dem das Anschlussteil, das Schlauchstück und der Spannring kraft- und spielfrei aufeinander liegen, jeweils weitestgehend in Form einer Geraden verläuft, wobei die Geraden unterschiedliche Steigungen aufweisen. Gemäß einer Weiterbildung nach Anspruch 3 des Ausführungsbeispiels nach Anspruch 2 wird die Verlustkraft in dem Punkt bestimmt, in dem sich die Geraden schneiden (wie dies im einzelnen erfolgt s. Figurenbeschreibung). Der Vorteil dieser Weiterbildung ist darin zu sehen, dass die Verlustkraft auf einfache Art und Weise in einem Punkt bestimmt werden kann.

Gemäß einem weiteren Ausführungsbeispiel der Erfindung nach Anspruch 4 wird die Verlustkraft wie folgt bestimmt:
- die Gerade vor dem Bereich, in dem das Presswerkzeug so weit zusammengefahren ist, dass das Anschlussteil, das Schlauchstück und der Spannring kraft- und spielfrei aufeinander liegen, wird über diesen Bereich hinaus geradlinig verlängert
- aus der verlängerten Geraden wird während des weiteren Zusammenfahrens des Presswerkzeugs für jeden Weg, den das Presswerkzeug über den genannten Bereich hinaus zurückgelegt hat, die dazugehörige Verlustkraft bestimmt.

Der Vorteil dieser Weiterbildung ist darin zu sehen, daß die Verlustkraft während des radialen Verpressens des Spannringes, nachdem dieser zur Anlage an das Schlauchstück gekommen ist, in jedem Punkt erneut exakt bestimmt wird. Ausgehend von dieser exakt bestimmten Verlustkraft wird die vorgegebene Kraft zwischen dem Schlauchstück und dem Anschlussteil eingestellt. (Näheres siehe Figurenbeschreibung).

Gemäß einer Weiterbildung der Erfindung nach Anspruch 5 wird die zur Bestimmung der Verlustkraft zugrunde gelegte Kraft-Weg-Kennlinie in zeitlichen Abständen neu aufgenommen. Dieser Weiterbildung liegt der Gedanke zugrunde, dass sich bestimmte Parameter, z. B. die Reibung innerhalb des Presswerkzeuges, nicht bei jedem Pressvorgang verändern, sondern erst sehr langsam über einen längeren Zeitraum. Dementsprechend kann über einen gewissen Zeitraum die Verlustkraft mit ausreichender Genauigkeit anhand einer einmal zugrunde gelegten Kraft-Weg-Kennlinie bestimmt werden, wenn während der wiederholten Durchführung des Verfahrens immer die gleichen Bauteile, d.h. das gleiche Anschlussteil, das gleiche Schlauchstück und der gleiche Spannring verwendet wird (dies ist bei der Fertigung einer Charge immer der Fall). Es hat sich herausgestellt, daß das erfindungsgemäße Verfahren mit ausreichender Genauigkeit durchgeführt werden kann, wenn die zugrunde gelegte Kraft-Weg-Kennlinie, anhand der die Verlustkraft bestimmt wird, alle 100 bis 10.000 Pressvorgänge neu aufgenommen wird. Der Vorteil der Weiterbildung ist darin zu sehen, dass die Kraft-Weg-Kennlinie für viele Pressvorgänge nur einmal aufgenommen zu werden braucht.

Gemäß einer Weiterbildung der Erfindung nach Anspruch 6 wird die Kraft-Weg-Kennlinie während des Verpressens eines Spannringes jeweils aktuell aufgenommen und diese aktuell aufgenommene Kraft-Weg-Kennlinie wird während des Verpressens dieses Spannringes zur Bestimmung der Verlustkraft zugrunde gelegt. Der Vorteil dieser Weiterbildung ist darin zu sehen, dass sie eine Durchführung des Verfahrens mit größtmöglicher Genauigkeit ermöglicht. Kommt es beispielsweise vor, dass bei der Charge von benutzten Spannringen, die alle die gleiche Härte aufweisen sollten, ein Spannring eine davon abweichende Härte aufweist, so wird dadurch dies die Größe der Verlustkraft beeinflußt. Dies wird jedoch anhand der aktuell aufgenommenen Kraft-Weg-Kennlinie während des Verpressens dieses Spannringes festgestellt, so daß auch in diesem Fall die definierte vorgegebene Kraft zwischen dem Schlauchstück und dem Anschlussteil exakt eingestellt werden kann (im Gegensatz dazu würde eine solche Abweichung durch die Weiterbildung gemäß Anspruch 5 nicht erfaßt werden können).

Gemäß einer Weiterbildung der Erfindung nach Anspruch 7 wird mit der Aufnahme der Kraft-Weg-Kennlinie begonnen, bevor das Presswerkzeug in Kontakt zu dem Spannring gelangt. Der Vorteil dieser Weiterbildung ist darin zu sehen, daß die gesamte Kraft-Weg-Kennlinie aufgenommen wird, die das Presswerkzeug während des Verpressens eines Spannringes durchläuft. Aus der gesamten Kraft-Weg-Kennlinie können über die Verlustkraft hinaus weitere Informationen gewonnen werden. So kann aus ihr beispielsweise bestimmt werden, wie hoch die Reibungskraft innerhalb des Presswerkzeuges ist. Überschreitet diese einen bestimmten Wert, so kann eine Wartung des Presswerkzeuges vorgenommen werden. Darüber hinaus kann der gesamten Kraft-Weg-Kennlinie beispielsweise entnommen werden. wann die Pressbacken des Presswerkzeuges bei der Verwendung einer Charge von Spannringen, die alle den gleichen Querschnitt aufweisen sollen, in Anlage zu dem Spannring kommen. Findet die Anlage nicht statt. nachdem das Presswerkzeug einen bestimmten Weg durchlaufen hat, so ist dies ein Anzeichen dafür, dass aus Versehen ein nicht geeigneter Spannring in das Presswerkzeug eingelegt wurde (ist der Querschnitt des Spannringes z. B. wesentlich zu groß, weil ein falscher Spannring eingelegt wurde, so führt dies dazu, daß die Pressbacken des Presswerkzeuges wesentlich früher an dem Spannring anliegen, als wenn ein ordungsgemäßer Spannring eingelegt worden wäre).

Ein Ausführungsbeispiel und weitere Vorteile der Erfindung werden im Zusammenhang mit den nachstehenden Figuren erläutert, darin zeigt:
- Fig. 1: ein Presswerkzeug zur Befestigung eines Schlauchstückes an einem Anschlussteil,
- Fig. 2: ein Diagramm,
- Fig. 3: ein Diagramm,
- Fig. 4: ein Diagramm,
- Fig. 5: ein Diagramm.

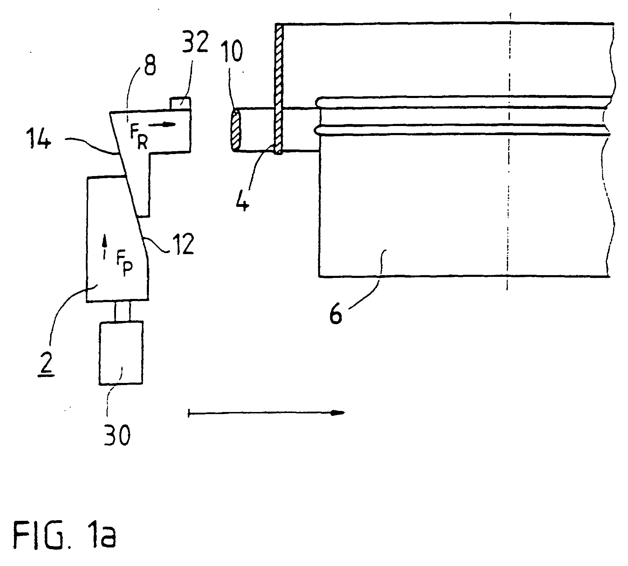

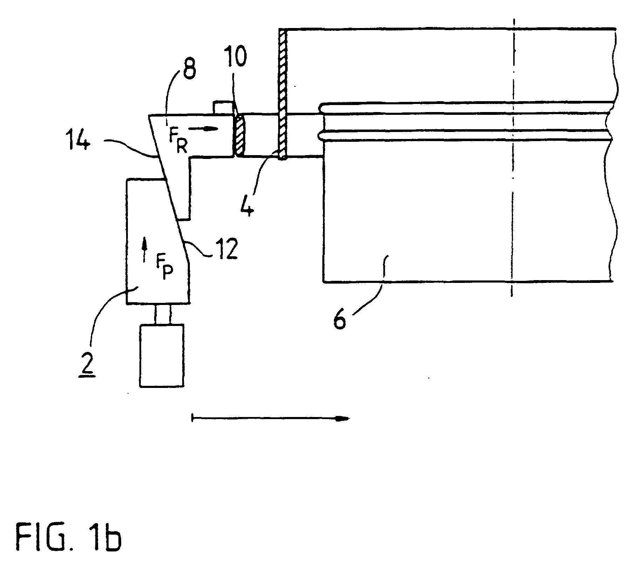

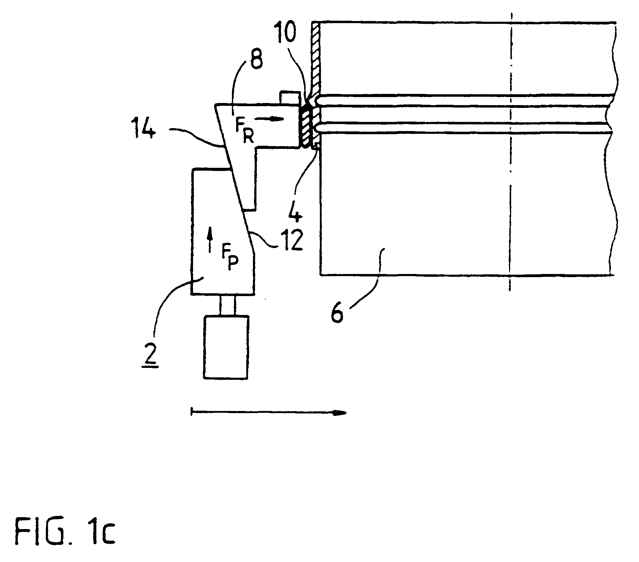

Figur 1 zeigt in schematischer Darstellung ein an sich bekanntes Presswerkzeug 2 zur Befestigung eines Schlauchstückes in Form eines Schlauchrollbalges 4 an einem Anschlussteil 6, das z.B. Teil einer Luftfeder ist (in diesem Fall handelt es sich bei dem Anschlussteil 6 um den Deckel bzw. um den Abrollkolben der Luftfeder). Das Presswerkzeug 2 enthält einzelne kreisförmig angeordnete Pressbacken 8, von denen in der Figur 1 nur eine schematisch dargestellt ist. Die Pressbacken 8 sind durch das Presswerkzeug 2 in radialer Richtung verstellbar. Dies kann beispielsweise mit dem in der Figur 1 gezeigten Mechanismus geschehen. Zum Verstellen der Pressbacken 8 in radialer Richtung muß von dem Presswerkzeug eine Kraft F_{P} erzeugt werden, die in eine Kraft F_{R} umgewandelt wird, durch die die Pressbacken zusammengefahren werden. Die in dem Presswerkzeug 2 erzeugte Kraft F_{P} wird zur Erstellung einer Kraft-Weg-Kennlinie von einem Kraftsensor gemessen werden. Der Kraftsensor kann z.B. in der Hydraulikeinheit 30 des Presswerkzeuges 2 angeordnet sein, mit der die Kraft F_{P} erzeugt wird. Darüber hinaus enthält das Presswerkzeug einen Wegsensor 32, mit dem der Durchmesser zwischen den Pressbacken bestimmt wird.

Während des Zusammenfahrens der Pressbacken 8 durchlaufen diese zunächst einen Luftspalt, bis sie in Berührung mit dem Spannring 10 kommen, der den Schlauchrollbalg 4 koaxial umfaßt (s. Figur 1a). Während des Durchlaufens des Luftspaltes braucht die von dem Presswerkzeug 2 erzeugte Kraft F_{P} nur die in dem Presswerkzeug vorliegende Gleitreibung zu überwinden (in dem gezeigten Beispiel entsteht die Gleitreibung durch Aneinandergleiten der schiefen Ebenen 12 und 14).

Figur 1b zeigt das Presswerkzeug 2, nachdem die Pressbacken 8 in Anlage an den Spannring 10 gekommen sind. Bei einem weiteren Zusammenfahren der Pressbacken 8 wird der Spannring 10 zunächst elastisch und danach plastisch verformt. Dabei gelangt der Spannring 10 in Anlage an den Schlauchrollbalg 4 und bei einem weiteren Zusammenfahren der Pressbacken wird der Innendurchmesser des Spannringes 10 und des Schlauchrollbalges 4 weiter verkleinert, bis der Spannring 10 und der Schlauchrollbalg 4 kraft- und spielfrei auf dem Anschlussteil 6 liegen (dieser Zustand ist in Figur 1 c gezeigt).

Nachdem der Schlauchrollbalg 4 und der Spannring 10 zur kraft- und spielfreien Auflage auf das Anschlußteil 6 gekommen sind, werden die Preßbacken 8 durch das Presswerkzeug 2 weiter zusammengefahren. Dabei wird auf den Spannring 10 eine Kraft ausgeübt, die zu einer weiteren plastischen Verformung des Spannringes 10 und zu einer Kraft zwischen dem Schlauchrollbalg 4 und dem Anschlussteil 6 führt. Darüber hinaus führt das weitere Zusammenfahren der Pressbacken 8 zu einer Verformung des Anschlussteiles 6. Im Zusammenhang mit den folgenden Figuren wird erläutert, wie durch das erfindungsgemäße Verfahren eine vorgegebene definierte Kraft zwischen dem Schlauchrollbalg 4 und dem Anschlußteil 6 eingestellt werden kann.

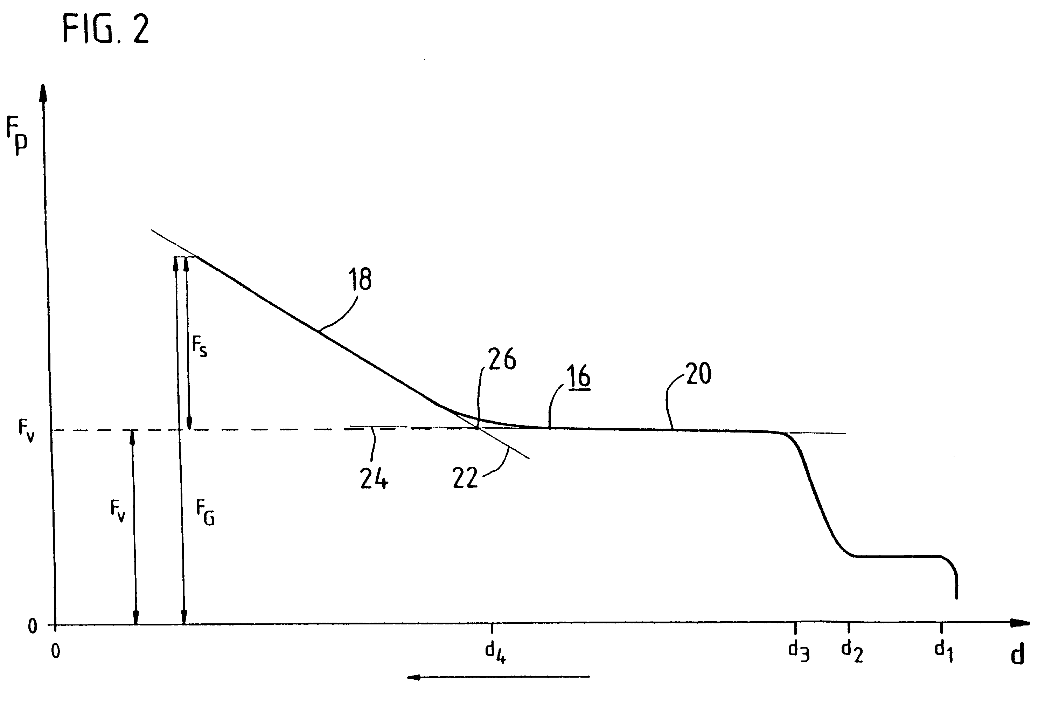

Figur 2 zeigt ein Diagramm, in dem die Kraft F_{P} über den Durchmesser d zwischen den Pressbacken 8 aufgetragen ist (unter der Achse d für den Durchmesser ist ein Pfeil eingezeichnet, der die Richtung angibt, in der die Pressbacken 8 des Presswerkzeuges 2 zusammengefahren werden, nämlich ausgehend von einem großen Durchmesser zwischen den Pressbacken 8 zu kleineren Durchmessern). In das Diagramm ist eine Kraft-Weg-Kennlinie 16 eingezeichnet, die das Presswerkzeug 2 während des Zusammenfahrens der Pressbacken 8 erzeugt. Die Kraft-Weg-Kennlinie 16 wird mittels des Kraft- und Wegsensors aufgenommen. Die Kraft-Weg-Kennlinie 16 erklärt sich wie folgt: Vom Durchmesser d1 bis zum Durchmesser d2 durchfahren die Pressbacken 8 einen Luftspalt und es braucht von dem Presswerkzeug 2 nur die konstante Gleitreibung in dem Presswerkzeug 2 überwunden zu werden (s. auch Figur 1 a). Bei dem Durchmesser d2 gelangen die Pressbacken 8 in Berührung mit dem Spannring 10, der bei einem weiteren Zusammenfahren der Pressbacken 8 von dem Durchmesser d2 bis zum Durchmesser d3 elastisch verformt wird.

Ausgehend von dem Durchmesser d3 werden die Pressbacken 8 bis zu dem Durchmesser d4 weiter zusammengefahren und in diesem Bereich findet eine plastische Verformung des Spannringes 10 statt. Von dem Presswerkzeug 2 muss zwischen den Durchmessern d3 und d4 demnach eine Gesamtkraft aufgebracht werden, die der Summe aus der Reibung in dem Presswerkzeug 2 und der für die plastische Verformung des Spannringes 10 benötigten Kraft entspricht. Bei dem Durchmesser d4 gelangen der Spannring 10 und der Schlauchrollbalg 4 (zu dessen Verformung nur zu vernachlässigende Kräfte erforderlich sind) in kraft- und spielfreie Anlage an das Anschlussteil 6 (s. auch Figur 1c). Zwischen den Durchmessern d3 und d4 verläuft die Kraft-Weg-Kennlinie weitestgehend in Form einer Geraden 20, die nur eine geringe Steigung aufweist, weil bis zum Durchmesser d4 die Kraft zur plastischen Verformung des Spannringes 10 und die Kraft zur Überwindung der Reibung im Presswerkzeug über den gesamten zurückgelegten Weg nahezu konstant ist.

Ausgehend vom Durchmesser d4 werden die Pressbacken 8 durch das Presswerkzeug 2 weiter zusammengefahren, was zu einer weiteren plastischen Verformung des Spannringes 10 und zu einer Kraft zwischen dem Schlauchrollbalg 4 und dem Anschlussteil 6 führt. Darüber hinaus führt das weitere Zusammenfahren der Pressbacken 8 zu einer Verformung des Anschlussteiles 6. Aus diesem Grunde geht die Kraft-Weg-Kennlinie 16 ab dem Durchmesser d4 in eine Gerade 18 über, die eine größere Steigung hat als die Gerade 20. Die Steigung der Geraden 18 ist weitestgehend abhängig von der Steifigkeit des Anschlussteiles 6 (und in zu vernachlässigendem Maß von der Steifigkeit des Schlauchrollbalges 4). So hat die Gerade 18 eine geringe Steigung, wenn das Anschlussteil weich ist und eine große Steigung, wenn das Anschlußteil 6 hart ist.

Die obigen Ausführungen zeigen, dass der Bereich der Kraft-Weg-Kennlinie 16, in dem der Schlauchrollbalg 4, der Spannring 10 und das Anschlussteil 6 kraftund spielfrei aufeinander liegen, dort liegt, wo die Kraft-Weg-Kennlinie 16 aus einem flach verlaufenden Stück (Gerade 20) beginnt, anzusteigen (um in die Gerade 18 überzugehen). Vor diesem Bereich liegt zwischen den Pressbacken 8 des Presswerkzeuges 2 ein größerer Durchmesser als hinter diesem Bereich.

Mit Hilfe der in der Figur 2 gezeigten Kraft-Weg-Kennlinie 16 wird die Kraft zwischen dem Schlauchrollbalg 4 und dem Anschlussteil 6, die sich beim Zusammenfahren der Pressbacken 8 ergibt, z.B. wie folgt bestimmt: An den Geraden 18 und 20 der Kraft-Weg-Kennlinie 16 wird jeweils eine Tangente 22 und 24 angelegt. Die Tangenten 22 und 24 schneiden sich in einem Punkt 26, der im Bereich der Kraft-Weg-Kennlinie 16 liegt, in dem das Anschlussteil 6, der Schlauchrollbalg 4 und der Spannring 10 kraft- und spielfrei aufeinander liegen (also in unmittelbarer Nähe des Durchmessers d4). Nach Bestimmung des Punktes 26 wird die zu diesem Punkt zugehörige Kraft Fv bestimmt. Diese Kraft F_{V} entspricht weitestgehend der Verlustkraft, die von dem Presswerkzeug 2 zur plastischen Verformung des Spannringes 10 und zur Überwindung der inneren Reibung des Presswerkzeuges 2 erzeugt werden muß, d.h. diese Verlustkraft leistet keinen Beitrag zur Erzeugung einer Kraft zwischen dem Schlauchrollbalg 4 und dem Anschlussteil 6.

Die Bestimmung der Verlustkraft - wie auch wie die nachfolgenden Verfahrensschritte - erfolgen bei diesem und weiteren Ausführungsbeispielen in der Steuereinheit des Presswerkzeuges 2. Die dazu notwendige mathematischen Verfahren (Tangentenbildung, Schnittpunktbildung) sind an sich bekannt.

Nachdem die Verlustkraft festgestellt worden ist, werden mit Hilfe des Presswerkzeuges 2 die Pressbacken 8 weiter zusammengefahren. Dabei wird in dem Presswerkzeug 2 mittels des Kraftsensors ständig die von dem Presswerkzeug erzeugte Gesamtkraft gemessen und von dieser Gesamtkraft wird die Veriustkraft abgezogen. Die daraus resultierende Kraft entspricht der Kraft, die sich zwischen dem Schlauchrollbalg 4 und dem Anschlussteil 6 einstellt. Erreicht diese Kraft eine in der Pressvorrichtung 2 vorgegebene definierte Kraft, so stoppt die Pressvorrichtung 2 ein weiteres Zusammenfahren der Pressbacken 8 (in der Figur 2 ist die Gesamtkraft F_{G} die Verlustkraft mit F_{V} und die sich zwischen dem Schlauchrollbalg 4 und dem Anschlußteil 6 einstellende Kraft als F_{S} bezeichnet).

Die Kraft-Weg-Kennlinie 16 kann während eines "Kalibrier-Pressvorganges" aufgenommen und dann aus ihr die Verlustkraft bestimmt werden. Für nachfolgende Pressvorgänge, bei denen die gleichen Spannringe 10, Schlauchrollbälge 4 und Anschlussteile 6 verwendet werden, wie im Kalibrier-Pressvorgang, kann dann die zuvor bestimmte Verlustkraft zugrunde gelegt werden. Eine erneute Aufnahme der Kraft-Weg-Kennlinie ist in diesem Fall erst notwendig, wenn sich in dem Verfahren bestimmte Parameter ändern (wenn sich also z.B. die Reibung in dem Presswerkzeug verändert hat oder andere Bestandteile, z.B. andere Spannringe in dem Pressvorgang verwendet werden sollen).

Alternativ ist es möglich, die Kraft-Weg-Kennlinie 16 bei jedem Pressvorgang neu aufzunehmen und die Verlustkraft aus jedem Pressvorgang erneut zu bestimmen.

Unabhängig davon, wie man vorgeht, reicht es aus, mit der Aufnahme der Kraft-Weg-Kennlinie 16 bei einem Durchmesser zwischen den Pressbacken zu beginnen, bei dem bereits eine plastische Verformung des Spannringes 10 vorliegt, denn nur dieser Bereich wird benötigt, um die Tangente 24 aufzufinden (ein entsprechender Durchmesser kann vorgegeben werden). Der Bereich der Kraft-Weg-Kennlinie 16, in dem ausschließlich die Reibung im Presswerkzeug überwunden wird und eine elastische Verformung des Spannringes stattfindet, ist zu einer Bestimmung der Tangente 24 und damit zur Bestimmung der Verlustkraft nicht notwendig.

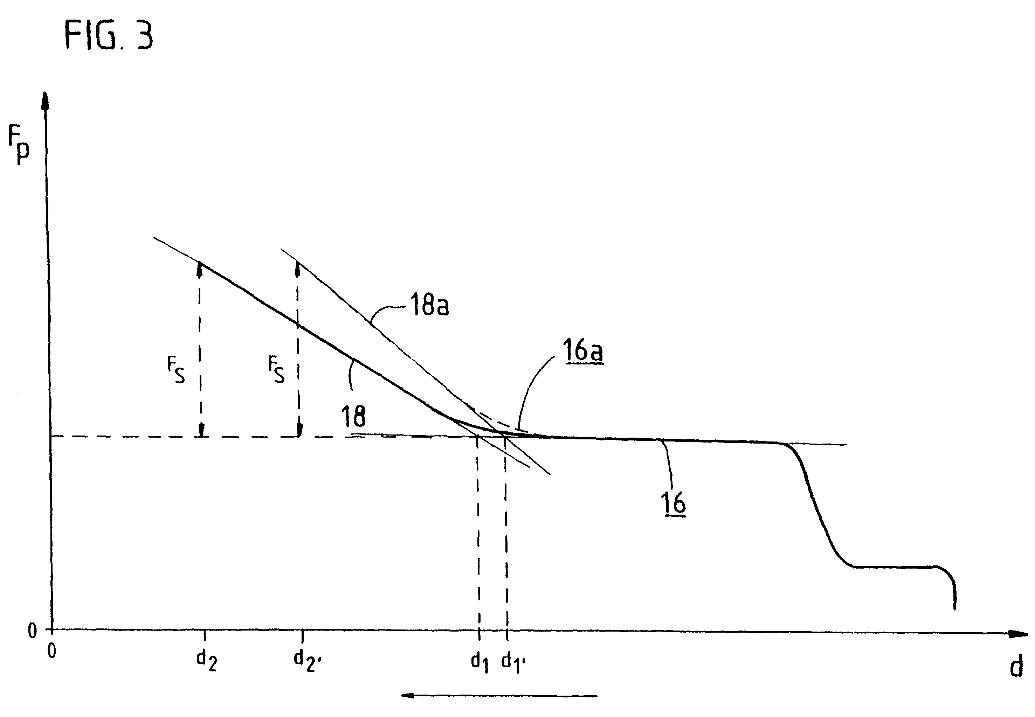

Figur 3 zeigt ein Diagramm, in das zwei Kraft-Weg-Kennlinien 16 und 16a eingezeichnet sind. Die beiden Kraft-Weg-Kennlinien 16 und 16a weisen weitestgehend den gleichen Verlauf auf; der einzige Unterschied ist darin zu sehen, dass bei der Kraft-Weg-Kennlinie 16a ein härteres Anschlussteil 6 verwendet wird und infolgedessen die Gerade 18a steiler verläuft als die entsprechende Gerade 18 der Kraft-Weg-Kennlinie 16. Aus den Kraft-Weg-Kennlinien 16 und 16a wird die Verlustkraft so bestimmt, wie es im Zusammenhang mit der Figur 2 erläutert worden ist. Nach Bestimmung der Verlustkraft werden die Pressbacken 8 mit Hilfe des Presswerkzeuges 2 weiter zusammengefahren, bis die Kraft F, die sich zwischen dem Schlauchrollbalg 4 und dem Anschlussteil 6 einstellt, der vorgegebenen Kraft entspricht. Da das zu der Kraft-Weg-Kennlinie 16a gehörende Anschlussteil eine große Steifigkeit aufweist, geht nur ein geringer Teil des von dem Presswerkzeug 2 zurückgelegten Weges in einer Verformung des Anschlussteiles 6 verloren. Dementsprechend stellt sich die Kraft F bei einem Durchmesser d2' ein, der größer ist als der Durchmesser d2, bis zu dem die Pressbacken 8 des Presswerkzeuges 2 zusammengefahren werden müssen, wenn man die Kraft-Weg-Kennlinie 16 für ein weicheres Anschlussteil zugrunde legt.

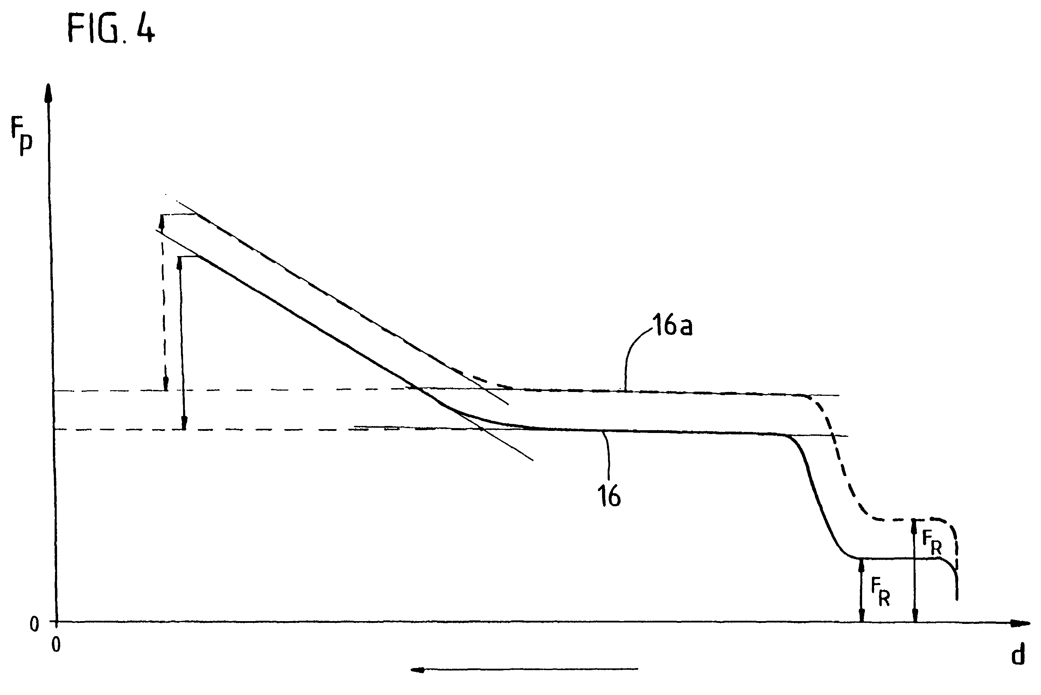

Figur 4 zeigt ein Diagramm, in dem ebenfalls die von dem Presswerkzeug 2 erzeugte Kraft F_{P} über dem Durchmesser d zwischen den Pressbacken 8 aufgetragen ist. In das Diagramm sind zwei Kraft-Weg-Kennlinien 16 und 16a eingezeichnet. Die beiden Kraft-Weg-Kennlinien 16 und 16a haben weitestgehend den gleichen Verlauf, weil die gleichen Anschlussteile 6, Spannringe 10 und Schlauchrollbälge 6 zugrunde liegen. Der einzige Unterschied ist darin zu sehen, dass die Kraft-Weg-Kennlinie 16a aufgrund einer erhöhten Reibung in dem Presswerkzeug 2, die sich im Laufe der Zeit einstellt, gegenüber der Kraft-Weg-Kennlinie 16 nach oben verschoben ist. Wird in dem Bereich, in dem das Anschlussteil 6, der Schlauchrollbalg 4 und der Spannring 10 kraft- und spielfrei aufeinander liegen, anhand der Kraft-Weg-Kennlinien 16 und 16a in dem Presswerkzeug die Verlustkraft bestimmt (z.B. so wie es im Zusammenhang mit der Figur 2 erläutert worden ist), so ist die Verlustkraft für die Kraft-Weg-Kennlinie 16a entsprechend größer als für die Kraft-Weg-Kennlinie 16, da sich die Kraft zur Überwindung der Reibung erhöht hat. Dementsprechend muss von dem Presswerkzeug 2 auch eine größere Gesamtkraft erzeugt werden, um durch das Zusammenfahren der Pressbacken 8 die vorgegebene definierte Kraft zwischen dem Schlauchrollbalg 4 und dem Anschlussteil 6 einzustellen.

Da die Reibung in dem Presswerkzeug 2 sich schleichend erhöht und somit ein Übergang von der Kraft-Weg-Kennlinie 16 zu der Kraft-Weg-Kennlinie 16a bei Verwendung gleicher Anschlussteile 6, Spannringe 10 und Schlauchrollbälge 4 während jedes Pressvorganges nur sehr langsam erfolgt, ist es ausreichend, für viele Befestigungsvorgänge zur Bestimmung der Kraft zwischen dem Schlauchrollbalg 4 und dem Anschlussteil 6 die Kraft-Weg-Kennlinie 16 zu verwenden. Erst wenn zu erwarten steht, dass aufgrund einer Erhöhung der Reibung in dem Presswerkzeug 2 eine neue Kraft-Weg-Kennlinie 16a signifikant von der Kraft-Weg-Kennlinie 16 abweicht, muss eine neue Kraft-Weg-Kennlinie 16a aufgenommen werden bzw. das Presswerkzeug gewartet werden, damit sich die Reibung wieder erniedrigt. Es hat sich gezeigt, dass ca. 100 - 10.000 Pressvorgänge durchgeführt werden können, ohne die genannten Maßnahmen durchzuführen.

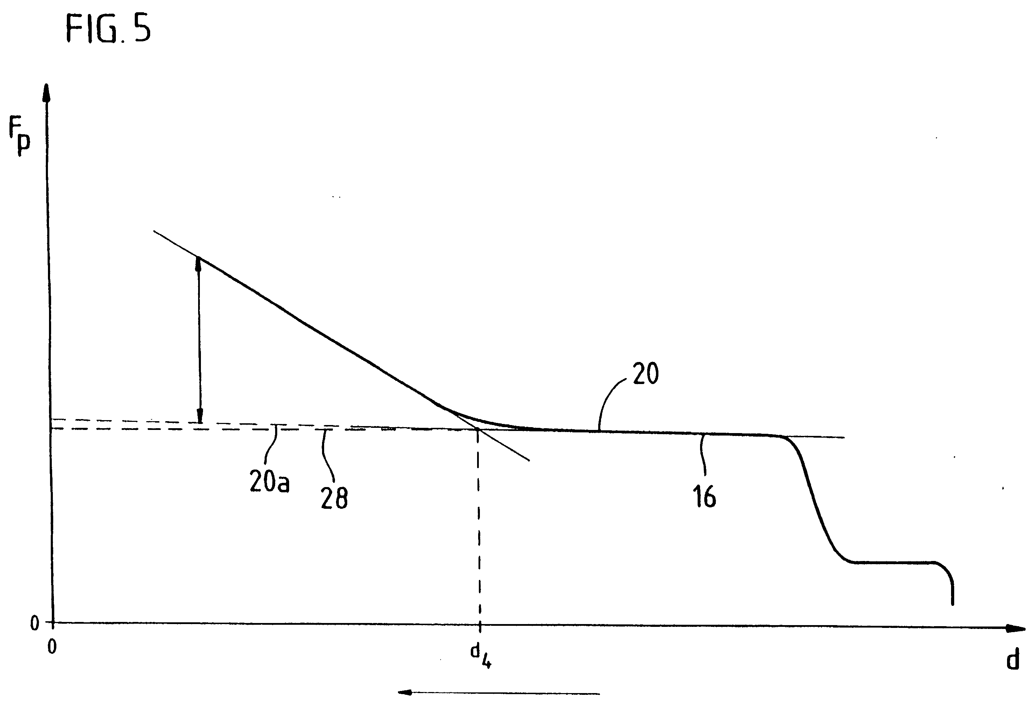

Figur 5 zeigt ebenfalls ein Diagramm, in dem die von dem Presswerkzeug 2 erzeugte Kraft F_{P} über dem Durchmesser d zwischen den Pressbacken 8 aufgetragen ist. In das Diagramm ist eine Kraft-Weg-Kenniinie 16 eingezeichnet, die mit der in der Figur 2 gezeigten Kraft-Weg-Kenniinie übereinstimmt. Im Zusammenhang mit der Figur 5 wird im folgenden erläutert. wie die Verlustkraft alternativ zu dem in der Figur 2 erläuterten Verfahren bestimmt werden kann: Zur Bestimmung der Verlustkraft wird die Gerade 20 über dem Bereich des Durchmessers d4, in dem das Anschlussteil 6, der Schlauchrollbalg 4 und der Spannring 10 kraft- und spielfrei aufeinander liegen, hinaus verlängert. Dieses ist deshalb möglich, da die Kraft-Weg-Kennlinie bei einer weiteren Verformung des Spannringes 4 ohne Anschlussteil 6 über den Durchmesser d4 hinaus einen weiterhin geraden Verlauf zeigen würde. Wenn die Pressbacken 8 des Presswerkzeuges 2 über den Durchmesser d4 hinaus zusammengefahren werden, läßt sich bei jedem neu eingestellten Durchmesser erneut exakt die Verlustkraft bestimmen, die zur Überwindung der Reibung in dem Presswerkzeug 2 und zur plastischen Verformung des Spannringes 10 notwendig ist. Die so bestimmte Verlustkraft wird während des Zusammenfahrens der Pressbacken 8 des Presswerkzeuges 2 von der von dem Presswerkzeug 2 erzeugten Gesamtkraft abgezogen, so dass die Kraft verbleibt, die sich zwischen dem Schlauchrollbalg und dem Anschlussteil einstellt. Erreicht diese Kraft eine vorgegebene definierte Kraft, so werden die Pressbacken 8 des Presswerkzeuges 2 nicht weiter zusammengefahren.

Auch das in verbindung mit dem Anspruch 5 vorgestelte Verfahren zur Bestimmung der Verlustkraft kann entweder in einem "Kalibrier-Pressvorgang" oder alternativ erneut während jedes einzelnen Pressvorganges durchgeführt werden.

In der Figur 5 ist durch die Gerade 28 in die Größe der Verlustkraft angezeigt, die sich bei der Bestimmung gemäß dem Verfahren nach Anspruch 2 ergeben würde. Der Figur ist zu entnehmen, dass die vereinfacht bestimmte Verlustkraft (wie im Zusammenhang mit der Figur 2 erläutert) nur unwesentlich von der exakt bestimmten Verlustkraft abweicht.

### Bezugszeichenliste

- 2: Presswerkzeug
- 4: Schlauchrollbalg
- 6: Anschlußteil
- 8: Pressbacke
- 10: Spannring
- 12, 14: schiefe Ebenen
- 16: Kraft-Weg-Kennlinie
- 18,20: Gerade
- 22,24: Tangente
- 28: Gerade
- 30: Hydraulikeinheit
- 32: Wegsensor

## Patentansprüche

1. Verfahren zur dichten Befestigung eines Schlauchstückes aus elastomerem Werkstoff, insbesondere von Schlauchrollbälgen (4) für Luftfedern, an einem Anschlussteil (6) mittels eines Spannringes (10), der durch ein Presswerkzeug (2) radial verpresst wird, **gekennzeichnet durch** folgende Verfahrensschritte:
- es wird eine Kraft-Weg-Kennlinie (16) des Presswerkzeuges (2) zugrunde gelegt, die während des radialen Verpressens eines Spannringes (10) aufgenommen wird, wobei mit der Aufnahme begonnen wird, bevor das Anschlussteil (6), das Schlauchstück und der Spannring (10) kraft- und spielfrei aufeinander liegen
- aus der Kraft-Weg-Kennlinie (16) wird die Verlustkraft bestimmt, die zur Verformung eines Spannringes (10) und zur Überwindung der Reibung im Presswerkzeug (2) notwendig ist
- die über die Verlustkraft hinausgehende Kraft wird so eingestellt, dass sie einer vorgegebenen Kraft zwischen dem Schlauchstück und dem Anschlussteil (6) entspricht.

2. Verfahren zur dichten Befestigung eines Schlauchstückes nach Anspruch 1, **dadurch gekennzeichnet, dass** die Verlustkraft in dem Bereich der Kraft-Weg-Kennlinie (16) bestimmt wird, in dem das Presswerkzeug (2) so weit zusammengefahren ist, dass das Anschlussteil (6), das Schlauchstück und der Spannring (10) kraft- und spielfrei aufeinander liegen.

3. Verfahren zur dichten Befestigung eines Schlauchstückes nach Anspruch 2, **dadurch gekennzeichnet, dass** die Kraft-Weg-Kennlinie (16) vor und hinter dem Bereich, in dem das Anschlussteil (6), das Schlauchstück und der Spannring (10) kraft- und spielfrei aufeinander liegen, jeweils weitestgehend in Form einer Geraden (18, 20) verläuft, wobei die Geraden (18, 20) unterschiedliche Steigungen aufweisen, und dass die Verlustkraft in dem Punkt (26) bestimmt wird, in dem sich die Geraden (18, 20) schneiden.

4. Verfahren zur dichten Befestigung eines Schlauchstückes nach Anspruch 1, **dadurch gekennzeichnet, dass** die Kraft-Weg-Kennlinie (16) vor und hinter dem Bereich, in dem das Presswerkzeug (2) so weit zusammengefahren ist, dass das Anschlussteil (6), das Schlauchstück und der Spannring (10) kraft- und spielfrei aufeinander liegen, jeweils weitestgehend in Form einer Geraden (28) verläuft. wobei die Geraden (28) unterschiedliche Steigungen aufweisen, und dass die Verlustkraft wie folgt bestimmt wird:
- die Gerade (20) vor dem Bereich, in dem das Anschlussteil (6), das Schlauchstück und der Spannring (10) kraft- und spielfrei aufeinander liegen, wird über diesen Bereich hinaus geradlinig verlängert
- aus der verlängerten Geraden (20) wird für jeden Weg, den das Presswerkzeug (2) über den genannten Bereich hinaus zurückgelegt hat, die dazugehörige Verlustkraft bestimmt.

5. Verfahren zur dichten Befestigung eines Schlauchstückes nach einem der Ansprüche 1 bis 4, **dadurch gekennzeichnet, dass** die zur Bestimmung der Verlustkraft zugrunde gelegte Kraft-Weg-Kennlinie (16) in zeitlichen Abständen neu aufgenommen wird.

6. Verfahren zur dichten Befestigung eines Schlauchstückes nach einem der Ansprüche 1 bis 4, **dadurch gekennzeichnet, dass** die Kraft-Weg-Kennlinie (16) während des Verpressens eines Spannringes (10) jeweils aktuell aufgenommen wird und dass diese aktuelle Kraft-Weg-Kennlinie (16) während des Verpressens des Spannringes (10) zur Bestimmung der Verlustkraft zugrunde gelegt wird.

7. Verfahren zur dichten Befestigung eines Schlauchstücken nach einem der Ansprüche 1 bis 6, **dadurch gekennzeichnet, dass** mit der Aufnahme der Kraft-Weg-Kennlinie (16) begonnen wird. bevor das Presswerkzeug (2) in Kontakt zu dem Spannring (10) gelangt.

8. Presswerkzeug mit zusammenfahrbaren Pressbacken (8) zum radialen Verpressen eines Spannrings (10) für eine dichte Befestigung eines Schlauchstücks aus einem elastomeren Werkstoff an einem Anschlussteil (6),
mit einer Messeinrichtung zur Bestimmung der Presskraft (Fₚ) des Presswerkzeugs,
einer Einrichtung zur Bestimmung des Weges, den die Pressbacken (8) während des Zusammenfahrens zurücklegen und
einer Einrichtung zur Bestimmung einer Verlustkraft (Fᵥ) bis zum Andrücken des Spannrings (10) an das Anschlussteil (6) und einer Differenz aus Presskraft (Fₚ) und Verlustkraft (Fᵥ) beim weiteren Zusammenfahren der Pressbacken (8) durch Auswertung einer mit den Messeinrichtungen ermittelten Kraft-Weg-Kennlinie.

## Claims

1. Method for tightly attaching a piece of flexible tubing composed of elastomer material, in particular of rolling bellow (4) for pneumatic springs, to a connecting part (6) by means of a clamping ring (10) which is pressed radially by a pressing tool (2), **characterized by** the following method steps:
- a force/travel characteristic curve (16) of the pressing tool (2) is used as the basis and is recorded during the radial pressing of a clamping ring (10), the recording being started before the connecting part (6), the piece of flexible tubing and the clamping ring (10) rest one on the other in a way which is free of force and play,
- the power loss which is necessary to deform a clamping ring (10) and to overcome the friction in the pressing tool (2) is determined from the force/travel characteristic curve (16),
- the force which exceeds the power loss is set in such a way that it corresponds to a predefined force between the piece of flexible tubing and the connecting part (6).

2. Method for tightly attaching a piece of flexible tubing according to Claim 1, **characterized in that** the power loss is determined in the region of the force/travel characteristic curve (16) in which the pressing tool (2) has contracted to such an extent that the connecting part (6), the piece of flexible tubing and the clamping ring (10) rest one on the other in a way which is free of force and play.

3. Method for tightly attaching a piece of flexible tubing according to Claim 2, **characterized in that** the force/travel characteristic curve (16) extends before and after the region in which the connecting part (6), the piece of flexible tubing and the clamping ring (10) rest one on the other in a way which is free of force and play, each largely in the form of a straight line (18, 20), the straight lines (18, 20) having different positive gradients, and **in that** the power loss is determined at the point (26) at which the straight lines (18, 20) intersect.

4. Method for tightly attaching a piece of flexible tubing according to Claim 1, **characterized in that** the force/travel characteristic curve (16) extends before and after the region in which the pressing tool (2) has contracted to such an extent that the connecting part (6), the piece of flexible tubing and the clamping ring (10) rest one on the other in a way which is free of force and play, each largely in the form of a straight line (28), the straight lines (28) having different positive gradients, and **in that** the power loss is determined as follows:
- before the region in which the connecting part (6), the piece of flexible tubing and the clamping ring (10) rest one on the other in a way which is free of force and play, the straight line (20) is lengthened linearly beyond this region,
- the associated power loss is determined from the lengthened straight line (20) for each amount of travel which the pressing tool (2) has executed beyond the aforesaid region.

5. Method for tightly attaching a piece of flexible tubing according to one of Claims 1 to 4, **characterized in that** the force/travel characteristic curve (16) which is used as the basis for determining the power loss is newly recorded at time intervals.

6. Method for tightly attaching a piece of flexible tubing according to one of Claims 1 to 4, **characterized in that** the force/travel characteristic curve (16) is respectively recorded on an updated basis during the pressing of a clamping ring (10), and **in that** this current force/travel characteristic curve (16) is used as the basis for determining the power loss during the pressing of the clamping ring (10).

7. Method for tightly attaching a piece of flexible tubing according to one of Claims 1 to 6, **characterized in that** the recording of the force/travel characteristic curve (16) is started before the pressing tool (2) moves into contact with the clamping ring (10).

8. Pressing tool with retractable pressing jaws (8) for radially pressing a clamping ring (10) for tightly attaching a piece of flexible tubing composed of an elastomer material to a connecting part (6), having a measuring device for determining the pressing force (Fp) of the pressing tool, a device for determining the travel which the pressing jaws (8) execute during the retraction, and a device for determining a power loss (Fᵥ) until the clamping ring (10) is pressed against the connecting part (6), and for determining a difference from the pressing force (Fₚ) and power loss (Fᵥ) during the further retraction of the pressing jaws (8) by evaluating a force/travel characteristic curve which is determined using the measuring devices.

## Revendications

1. Procédé pour fixer de manière étanche une pièce tubulaire en matériau élastomère, en particulier des soufflets roulants tubulaires (4) pour ressorts pneumatiques, sur une partie de raccordement (6) au moyen d'une bague de serrage (10) qui est pressée radialement par un outil de pressage (2), **caractérisé par** les étapes de procédé suivantes :
- on prend pour base une caractéristique force-distance (16) de l'outil de pressage (2) qui est enregistrée pendant le pressage radial d'une bague de serrage (10), en partant de la supposition initiale que la pièce tubulaire et la bague de serrage (10) sont appliquées l'une sur l'autre sans force et sans jeu avant la partie de raccordement (6),
- on détermine à partir de la caractéristique force-distance (16) la force de perte qui est nécessaire pour la déformation d'une bague de serrage (10) et pour surmonter le frottement dans l'outil de pressage (2),
- la force dépassant la force de perte est ajustée de telle sorte qu'elle corresponde à une force prédéfinie entre la pièce tubulaire et la partie de raccordement (6).

2. Procédé pour fixer de manière étanche une pièce tubulaire selon la revendication 1, **caractérisé en ce que** la force de perte est déterminée dans la région de la caractéristique force-distance (16) dans laquelle l'outil de pressage (2) va si loin que la partie de raccordement (6), la pièce tubulaire et la bague de serrage (10) s'appliquent les unes sur les autres sans force et sans jeu.

3. Procédé pour fixer de manière étanche une pièce tubulaire selon la revendication 2, **caractérisé en ce que** la caractéristique force-distance (16) avant et après la région dans laquelle la partie de raccordement (6), la pièce tubulaire et la bague de serrage (10) s'appliquent les unes sur les autres sans force et sans jeu, s'étend à chaque fois essentiellement sous la forme d'une droite (18, 20), les droites (18, 20) présentant des pentes différentes et **en ce que** la force de perte est déterminée au point (26) auquel les droites (18, 20) se coupent.

4. Procédé pour fixer de manière étanche une pièce tubulaire selon la revendication 1, **caractérisé en ce que** la caractéristique force-distance (16) avant et après la région dans laquelle l'outil de pressage (2) va si loin que la partie de raccordement (6), la pièce tubulaire et la bague de serrage (10) s'appliquent les unes sur les autres sans force et sans jeu, s'étend à chaque fois essentiellement sous la forme d'une droite (28), les droites (28) présentant des pentes différentes et **en ce que** la force de perte est déterminée comme suit :
- la droite (20) avant la région dans laquelle la partie de raccordement (6), la pièce tubulaire et la bague de serrage (10) s'appliquent les unes sur les autres sans force et sans jeu, est prolongée au-delà de cette région en ligne droite,
- on détermine à partir de la droite prolongée (20) pour chaque distance parcourue par l'outil de pressage (2) au-delà de ladite région, la force de perte associée.

5. Procédé pour fixer de manière étanche une pièce tubulaire selon l'une quelconque des revendications 1 à 4, **caractérisé en ce que** la caractéristique force-distance (16) prise pour base pour déterminer la force de perte est enregistrée à nouveau à intervalles temporels.

6. Procédé pour fixer de manière étanche une pièce tubulaire selon l'une quelconque des revendications 1 à 4, **caractérisé en ce que** la caractéristique force-distance (16) est enregistrée à chaque fois instantanément pendant le pressage d'une bague de serrage (10) et **en ce que** cette caractéristique force-distance instantanée (16) est prise pour base pendant le pressage de la bague de serrage (10) pour déterminer la force de perte.

7. Procédé pour fixer de manière étanche une pièce tubulaire selon l'une quelconque des revendications 1 à 6, **caractérisé en ce que** l'on commence à enregistrer la caractéristique force-distance (16) avant que l'outil de pressage (2) arrive en contact avec la bague de serrage (10).

8. Outil de pressage avec des mâchoires de pressage déplaçables conjointement (8) pour le pressage radial d'une bague de serrage (10) pour fixer de manière étanche une pièce tubulaire en matériau élastomère sur une partie de raccordement (6), comprenant un dispositif de mesure pour déterminer la force de pressage (Fₚ) de l'outil de pressage, un dispositif pour déterminer la distance que les mâchoires de pressage (8) parcourent pendant leur déplacement mutuel et
un dispositif pour déterminer une force de perte (Fᵥ) jusqu'à la pression de la bague de serrage (10) contre la partie de raccordement (6) et une différence entre la force de pressage (Fₚ) et la force de perte (Fᵥ) lors d'un déplacement conjoint supplémentaire des mâchoires de pressage (8) par analyse d'une caractéristique force-distance déterminée avec les dispositifs de mesure.
